# EUROPEAN PATENT APPLICATION

(11) **EP 4 660 467 A1**
(43) Date of publication of application: **10.12.2025**
(21) Application number: 24180244.6
(22) Date of filing: 05.06.2024
(51) Int. Cl.: F16B 5/02, F16B 29/00

(54) **BOLT SLEEVE WITH EXTRA GUIDING FEATURE OF SERRATION SLEEVES ON SCREWS**

(71) Applicant: Volvo Car Corporation, 405 31 Göteborg (SE)
(72) Inventor: Nordell, Magnus, 405 31 Göteborg (SE); Skagius, Adam, 405 31 Göteborg (SE); Weglin, Joakim, 405 31 Göteborg (SE); Brandin, Tobias, 405 31 Göteborg (SE)
(74) Representative: Nederlandsch Octrooibureau

(57) **Abstract**

A cylindrical guiding sleeve comprising an exterior surface configured to engage with a receiving part when the cylindrical sleeve is inserted into the receiving part; a hollow interior configured to receive a bolt shaft; an opening at a tapered end, wherein the opening is smaller than the hollow interior and wherein a shape of the opening is configured to limit movement of the tapered end around the bolt shaft such that the tapered end is substantially centred around a centre of the bolt shaft.

## Description

### Technical Field

The present disclosure relates to the fastener field, in particular sleeves used in conjunction with bolts, screws, and/s.

### Background of the Present Disclosure

Bolts and screws may join one or more receiving parts at a bolted joint or a screw joint. For brevity, the term bolt will be used to mean a bolt or a screw. Additionally, the term bolted joint will be used to mean a bolted joint or a screw joint.

A serration bolt may have serrations on its shank to create a locking feature at the bolted joint and therefore avoid slipping. The serrations may avoid slipping by creating a clamping force at the bolted joint. Generally, the larger the bolt the larger the clamping force it can generate. Serration bolts, having serrations on its shank, have been used to downsize bolts while maintaining the necessary clamping force at the bolted joint when assembling receiving parts.

However, serration bolts require access to both sides of a receiving part during assembly. For example, a first side of the assembly may require enough clearance to insert the serration bolt and a second side of the assembly may require enough clearance for a tightening tool to fully assemble the receiving part(s) with the serration bolt.

There is a trend to make things smaller and more compact. For example, vehicle engines have become compact, which reduces the space for access to the tip of a bolt or the head of a bolt needed to assemble the engine. Once the bolt is in its final position, it may be difficult to access the bolt to loosen or tighten it. Additionally, it may be difficult to align a bolt with an opening in a receiving part.

Additionally, the bolted joint may be subject to shear forces which make the bolt slip. To withstand the shear forces and prohibit the bolt from slipping, one may use larger bolts to generate more friction or clamping force, as compared to a smaller bolt, and prevent the bolt from slipping. However, larger bolts are in conflict with the trend to make things smaller and more compact.

The background section relating to using serration bolts in the assembly of receiving part(s) is merely intended to provide a contextual overview of some current issues and is not intended to be exhaustive. Other contextual information may become apparent to a person of skill in the art upon review of the following detailed description.

### Summary of the Present Disclosure

According to an embodiment, a bolt may include a cylindrical guiding sleeve. The cylindrical guiding sleeve may comprise an exterior surface configured to engage with a receiving part when the cylindrical guiding sleeve is inserted into the receiving part; a hollow interior configured to receive a bolt shaft; an opening at a tapered end, wherein the opening is smaller than the hollow interior and wherein a shape of the opening is configured to limit movement of the tapered end around the bolt shaft such that the tapered end is substantially centered around a center of the bolt shaft. Providing a cylindrical guiding sleeve with such a tapered end results in aid better aligning the sleeve with the bolt and aiding in inserting the combination bolt and sleeve in to a receiving part.

The cylindrical guiding sleeve may make it unnecessary to align both the sleeve and the bolt with the opening of the receiving part. If the bolt shaft is aligned with the opening of the receiving part, the opening of the tapered end of the cylindrical guiding sleeve will ensure that the tapered end of the cylindrical guiding sleeve is centered around the bolt shaft. When the bolt shaft is aligned to enter an opening of the receiving part, the cylindrical guiding sleeve will follow.

The exterior surface of a cylindrical guiding sleeve may create a mechanical lock between the cylindrical guiding sleeve and a receiving part. The cylindrical guiding sleeve helps to protect a bolt used in assembling the receiving part from shear forces which can help to minimize or prevent slippage. In particular, the exterior surface of the cylindrical guiding sleeve creates friction or clamping forces between the cylindrical guiding sleeve and a surface of the receiving part. The cylindrical guiding sleeve reduces the shear area to which the bolt is exposed and reduces the exposure of a bolt to shear forces.

The mechanical lock of the cylindrical guiding sleeve may protect a bolt or screw from shear forces. This allows an assembly to reduce the size of bolts due to the reduced shear forces acting on the bolted joint. Reducing bolt size can be done without sacrificing clamping force because, as compared to a conventional bolt alone, the mechanical lock reduces the need of a larger clamping force. Therefore, such an assembly may replace conventional bolts with smaller bolts or screws with a cylindrical guiding sleeve because the cylindrical guiding sleeve protects the bolted joint from shear forces. Reducing the bolt sizes in an assembly may reduce cost, materials and weight of an assembly.

Including the cylindrical guiding sleeve with a bolt can further reduce part handling and piece price because the reduced bolt size requires less assembly torque as compared to a larger bolt. As a result, there is a potential for using smaller tools during assembly.

According to an embodiment, the shape of the opening of the tapered end of the cylindrical guiding sleeve is configured to generate at least three points of contact with the bolt shaft. A cylindrical guiding sleeve with three points of contact with the bolt will limit or eliminate movement of the cylindrical guiding sleeve in a perpendicular, or vertical, direction with respect to the bolt shaft. This aids in insertion of a combination bolt and cylindrical guiding sleeve into a receiving part.

According to an embodiment, the cylindrical guiding sleeve further includes an annular disc, wherein a central hole of the annular disc aligns with the hollow interior. Such an annular disc with a central hole allows a bolt shaft to pass through the annular disc and into the hollow interior of the cylindrical guiding sleeve.

According to an embodiment, the cylindrical guiding sleeve includes a textured exterior surface. Such a texture may aid in creating a mechanical lock between the cylindrical guiding sleeve and the receiving part.

According to an embodiment, the cylindrical guiding sleeve includes a knurled exterior surface. Such a knurled exterior surface creates friction and/or clamping forces between the cylindrical guiding sleeve and a receiving part of an assembly, and therefore may create a mechanical lock between the cylindrical guiding sleeve and a receiving part. Such a mechanical lock between the cylindrical guiding sleeve and the receiving part allows the cylindrical guiding sleeve to absorb shear forces that would otherwise act on the bolted joint. The friction, locking and/or clamping force helps to minimize or prevents slippage. The cylindrical guiding sleeve may comprise other textures on the exterior surface capable of providing the necessary friction and/or clamping force.

According to an embodiment, the texture includes a serrations. Such serrations similarly aid in creating a mechanical lock between the cylindrical guiding sleeve and a receiving part.

According to an embodiment, the cylindrical guiding sleeve includes the annular disc which extends wider than the cylindrical guiding sleeve to form a shoulder around the cylindrical stem. Such an annular disc functions as a washer in the assembly of the bolt with the receiving part.

According to an embodiment, the cylindrical guiding sleeve a second side of the annular disc is configured to connect to a head of a bolt. Such a connection to the bolt head may further align the cylindrical guiding sleeve at both ends.

According to an embodiment, the cylindrical guiding sleeve may be formed of a ferrous material. Ferrous materials, such as phosphorous steel, are strong and cost-effective materials that may be suitable for vehicle parts. Other materials may be suitable for other applications. In addition to being strong and cost effective, ferrous materials are readily available. Cylindrical guiding sleeves made of ferrous materials are able to generate a strong mechanical lock between the cylindrical guiding sleeve and a receiving part thereby helping to protect a bolt or screw from shear forces.

According to an embodiment, the cylindrical guiding sleeve may include a thickness of the sleeve where the thickness of the tapered end is based on a tolerance of an assembly. The thickness of the sleeve wall may determine how snuggly the sleeve fits within the receiving part. The thickness of the tapered may be determined by tolerances in an assembly. For example, a high tolerance may allow for flexibility in determining the thickness of the tapered end. A low tolerance may be more restrictive in determining the thickness of the tapered end. A high tolerance value occurs when there is a relatively large difference between a diameter of the bolt and a diameter of the opening of the receiving part. A low tolerance value occurs when there is a relatively small difference between a diameter of the bolt and a diameter of the opening of the receiving part.

Tolerance value may be defined by standardized tolerance values. The thickness of the cylindrical guiding sleeve may be determined by the standardized tolerance values of the assembly. The tolerance of an assembly may be based on a bolt diameter a diameter of an opening for a receiving part. For example, for a bolt shaft with a diameter of approximately 10 mm the hole might be specified with a tolerance range from 10.05 mm to 10.1 mm. The tolerance value may be based on a standard of tolerance by looking up the bolt and hole diameters.

According to an embodiment, the cylindrical guiding sleeve may include a shape of the opening at the tapered is based on a tolerance of an assembly. For example, an assembly may include an opening in a receiving part that has a high tolerance value may allow for movement of the tapered end in a perpendicular direction with respect to the bolt shaft. An opening at the tapered end may be configured to make at least 3 points of contact for an assembly with a low tolerance. This reduces or eliminates movement of the sleeve in the perpendicular direction with respect to the bolt shaft and may ensure that the sleeve is aligned with the opening of a low tolerance assembly. The more points of contact the more limited the movement of the tapered end of the sleeve. The shape of the opening at the tapered end may approach a circle.

According to an embodiment, the cylindrical guiding sleeve where the exterior surface is configured to generate a mechanical lock between the cylindrical guiding sleeve and the receiving part. The mechanical lock may ensure an adequate bolt joint.

According to an embodiment, the cylindrical guiding sleeve where the shape of the opening is substantially triangular. Such a shape may be cost effectively formed during manufacturing and limit movement of the cylindrical guiding sleeve in a perpendicular direction with respect to the bolt shaft.

According to an embodiment, the cylindrical guiding sleeve may include where the tapered end of the cylindrical guiding sleeve has a thickness configured to deform the tapered end upon assembly. Such a thickness may eliminate any points of contact that were necessary during assembly, but are not required after assembly. Such a deformation may be beneficial where the points of contact which aligned the sleeve during assembly may be detrimental to the use of the receiving parts after assembly.

The cylindrical guiding sleeve may be connected to a bolt in such a way that the cylindrical guiding sleeve may rotate relative with respect to the bolt when connected to a bolt. This allows the bolt to be loosened or tightened without disturbing the mechanical lock between the cylindrical guiding sleeve and the receiving part.

A bolt or screw may include the cylindrical guiding sleeve previously described. The bolt or screw may comprise a head, a shank and a threaded portion. The cylindrical guiding sleeve may be installed on the bolt or screw such that the cylindrical guiding sleeve is between the head and threaded portion of the bolt or screw and around the shank of the bolt or screw.

### Brief Description of the Drawings

The present disclosure will now be described in further detail with reference to the drawings that shows one embodiment of the present disclosure:
FIG. 1A is a perspective view of a cylindrical guiding sleeve to create a locking function according to at least one example of the disclosure;
FIG. 1B is a cross-sectional view of the cylindrical guiding sleeve of FIG. 1A;
FIG. 1C is an end view of the cylindrical guiding sleeve of FIG. 1A;
FIG. 2A is a perspective view of a cylindrical guiding sleeve wherein the sleeve is tapered to create a locking function according to at least one example of the disclosure;
FIG. 2B is a cross-sectional view of the cylindrical guiding sleeve of FIG. 2A;
FIG. 2C is an end view of the cylindrical guiding sleeve of FIG. 2A;
FIG. 3A is a perspective view of a cylindrical guiding sleeve to create a locking function including an annular disc according to at least one example of the disclosure;
FIG. 3B is a cross-sectional view of the cylindrical guiding sleeve of FIG. 3A;
FIG. 3C is an end view of the cylindrical guiding sleeve of FIG. 3A;
FIG. 4 is a cross-sectional view a cylindrical guiding sleeve which is preassembled with a bolt or screw according to at least one example of the disclosure;
FIGS. 5A - 5C are cross-sectional views of a cylindrical guiding sleeve connected to a bolt to join two receiving parts at different points in time of assembly;
FIG. 6A is a cross sectional view of the cylindrical guiding sleeve connected to a bolt to join two receiving parts;
FIG. 6B is a cross sectional view of the cylindrical sleeve connected to a bolt to join two receiving parts.

### Detailed Description

The present disclosure is directed to a cylindrical guiding sleeve for use with a fasteners such as bolts and screws. The cylindrical guiding sleeve includes an exterior surface configured to generate a mechanical lock between the cylindrical guiding sleeve and a receiving part of an assembly and can have any number of different surface textures including but not limited to smooth, dimples, rough turned, serrations, a knurled surface, spiral serrations, a hatched surface, and a pattern of bumps. The cylindrical guiding sleeve may be used with a bolt to create a bolted joint in assembling one or more receiving parts and/or may be included with a preassembled ("SEM") bolt, screw to fasten one or more receiving parts.

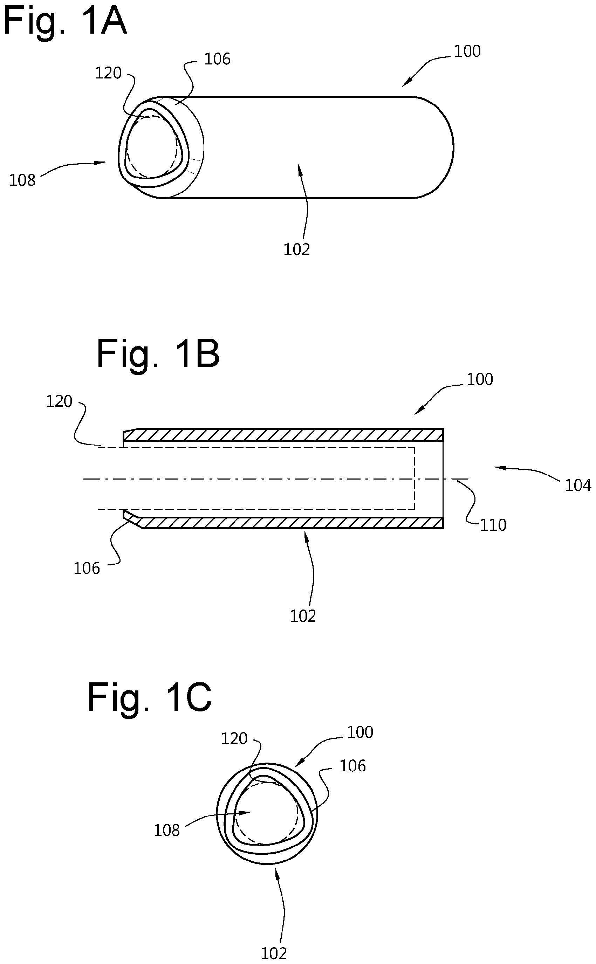

FIG. 1A is a perspective view of cylindrical guiding sleeve 100, FIG. 1B is a cross-sectional view of cylindrical guiding sleeve 100 and FIG. 1C is an end view of cylindrical guiding sleeve 100. Cylindrical guiding sleeve 100 includes exterior surface 102 with hollow interior 104, tapered end 106, and opening at the tapered end 108.

Cylindrical guiding sleeve 100 includes an exterior surface 102. Exterior surface 102 may include a texture which can extend over all or just part of exterior surface 102. Exterior surface 102 may include any number of different textures such as knurled, serrated, spiraled serrations, hatched, bumped, smooth, or any combination thereof. For example, the texture may extend from a middle of cylindrical guiding sleeve 100 to one end of cylindrical guiding sleeve 100. In some embodiments (including that shown in Figs. 1A-1C), cylindrical guiding sleeve 100 has tapered end 106 at one end of cylindrical guiding sleeve 100, which can help with insertion of cylindrical guiding sleeve 100 into an opening or cavity of a receiving part for forming a bolted joint. Cylindrical guiding sleeve 100 is typically hollow and includes hollow interior 104, which is typically cylindrical and extends through the length of cylindrical guiding sleeve 100. Hollow interior 104 may be sized and configured to fit around a shank of the bolt or a threaded length of the bolt.

Tapered end 106 may narrow the hollow interior 104 at tapered end 106 so that movement of the cylindrical guiding sleeve 100 in a perpendicular direction with respect to a bolt is limited at tapered end 106. For example, dotted line 120 represents a bolt inserted into hollow interior 104. Dotted line 110 represents a bolt shaft center. Gravity may act on cylindrical guiding sleeve 100. Tapered end 106 may limit the movement of cylindrical guiding sleeve 100 when gravity or other forces are acting upon it. Tapered end 106 may limit movement such that center of cylindrical guiding sleeve 100 at tapered end 106 is in line with center line 110.

The length of cylindrical guiding sleeve 100 may vary but is typically 0,5 to 3 times the diameter of the bolt for which it is intended to be used.

Cylindrical guiding sleeve 100 may be formed from steel, phosphorus steel, aluminum, plastic or any other material appropriate for the desired assembly depending on assembly requirements.

Typically, Cylindrical guiding sleeve 100 would be integrally formed, for example, from cutting, stamping, machining, moulding, pressing, printing, or any other suitable method. Texturing of exterior surface 102 could be done by shot peening, knurling, etching, pressing or any other suitable method.

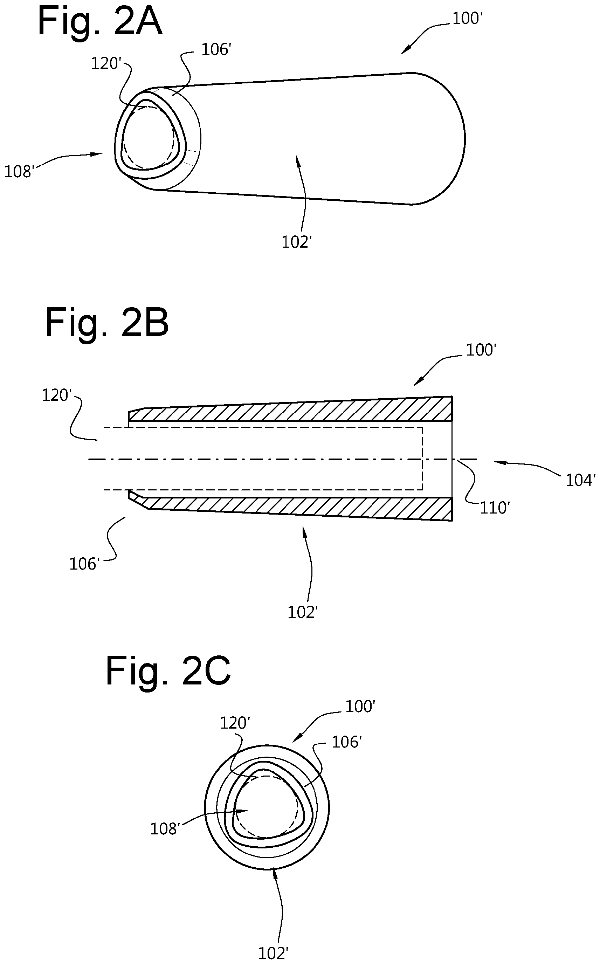

FIG. 2A is a perspective view of cylindrical guiding sleeve 100', FIG. 2B is a cross-sectional view of cylindrical guiding sleeve 100' and FIG. 2C is an end view of cylindrical guiding sleeve 100'. Cylindrical guiding sleeve 100' includes exterior surface 102' with hollow interior 104'.

Cylindrical guiding sleeve 100' is similar to cylindrical guiding sleeve 100. Cylindrical guiding sleeve 100' includes an exterior surface 102'. Exterior surface 102' may include a slope which can extend over all or just part of exterior surface 102'. The slope of exterior 102' may further aid in generating a mechanical lock with a receiving part. In some embodiments (including that shown in Figs. 2A-2C), cylindrical guiding sleeve 100' has tapered end 106' at one end of cylindrical guiding sleeve 100', which can help with insertion of cylindrical guiding sleeve 100' into a hole or cavity of a receiving part for forming a bolted joint. Cylindrical guiding sleeve 100' is typically hollow and includes hollow interior 104', which is typically cylindrical and extends through the length of cylindrical guiding sleeve 100'. Hollow interior 104' may be sized and configured to fit around a shank of the bolt or a threaded length of the bolt.

Exterior surface 102' of cylindrical guiding sleeve 100' may include a slope. For example, the slope of exterior surface 102' may be such that cylindrical guiding sleeve 100' has first circumference at one end of cylindrical guiding sleeve 100' and second circumference. As shown in in FIG. 2B, the first circumference is larger than the second circumference. The end of first circumference may be face a head of a bolt while the other end of second circumference may be inserted into a hole or cavity of a receiving part.

For example, according to certain embodiments, the slope of exterior surface 102' may have an angle of 17 degrees. Such a slope may extend from the end with the smaller circumference to the end with a larger circumference. Referring to FIG. 2B, the slope of exterior surface 102' would rise from the end with larger circumference to the end with the smaller circumference 108 at an angle of 17 degrees.

The angle may be configured to provide the desired mechanical lock and may further depend on the materials of the cylindrical guiding sleeve 100', receiving parts, assembly type among other variables.

The length of cylindrical guiding sleeve 100' may vary but is typically 0,5 to 3 times the diameter of the bolt for which it is intended to be used.

Cylindrical guiding sleeve 100' may be formed from steel, phosphorus steel, aluminum, plastic or any other material appropriate for the desired assembly depending on assembly requirements.

Typically, Cylindrical guiding sleeve 100' would be integrally formed, for example, from cutting, stamping, machining, moulding, pressing, printing, or any other suitable method. Texturing of exterior surface 102' could be done by shot peening, knurling, etching, pressing or any other suitable method.

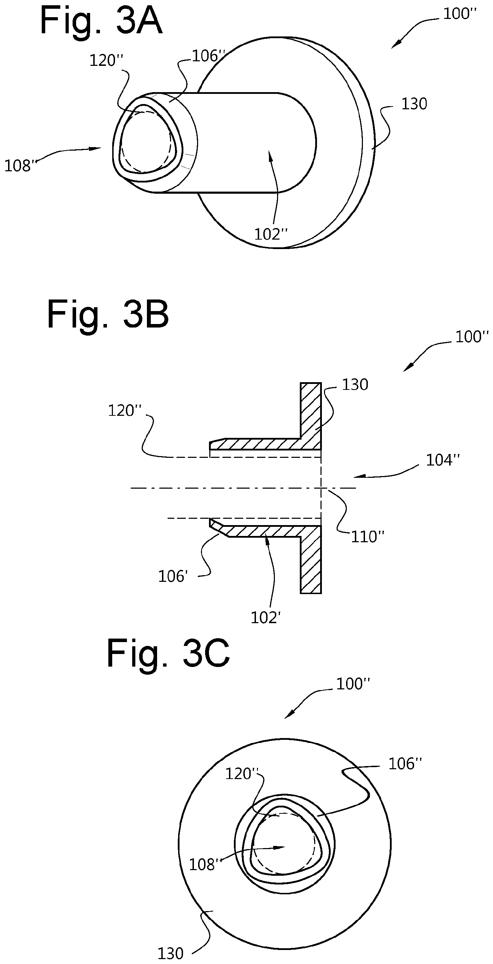

FIG. 3A is a perspective view of cylindrical guiding sleeve 100", FIG. 3B is a cross-sectional view of cylindrical guiding sleeve 100" and FIG. 3C is an end view of cylindrical guiding sleeve 100". Cylindrical guiding sleeve 100" includes exterior surface 102" with hollow interior 104".

Cylindrical guiding sleeve 100" may differ from Cylindrical guiding sleeve 100 and Cylindrical guiding sleeve 100" in that includes annular disc 130. Annular disc 130 may act as a washer when assembly cylindrical guiding sleeve 100" with receiving parts of an assembly. Additionally, Cylindrical guiding sleeve 100" may serve as a means to attach cylindrical guiding sleeve 100" to a bolt head .

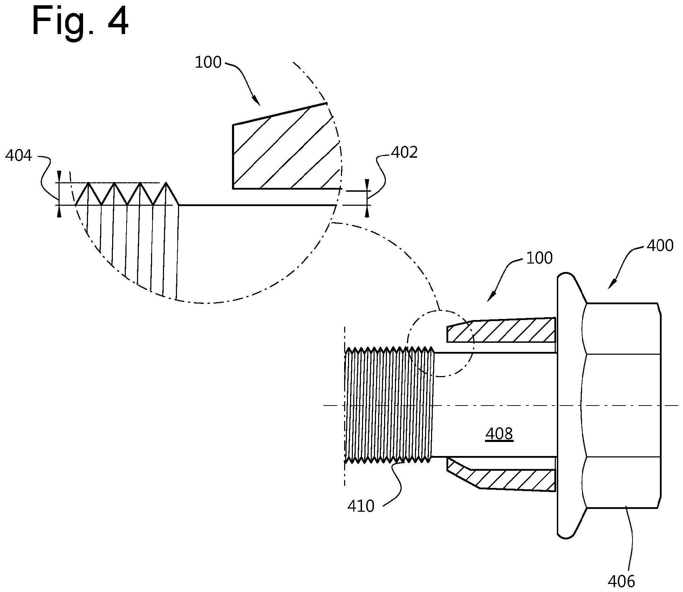

FIG. 4 is a cross-sectional view of a cylindrical guiding sleeve 100, 100', which has been preassembled on bolt 400, (hereinafter "SEM bolt") according to at least one example of the disclosure. In this example, cylindrical guiding sleeve 100, 100', 100" is positioned between a bolt head 406 and threads 410, positioned on shank 408. Cylindrical guiding sleeve 100, 100', 100" is in a position on bolt 400 such that surrounds shank 408 for at least part of the length of shank 408. The diameter of cavity of hollow interior 104, 104', 104" is such that cylindrical guiding sleeve 100, 100', 100" is loose around shank 408 and can move and/or rotate with respect to shank 408, but not large enough to move over or slide past threads 410. Thus, bolt 400 may rotate without rotating cylindrical guiding sleeve 100, 100', 100" and vice versa when cylindrical guiding sleeve 100, 100', 100" installed on bolt 400. For example, the diameter of cavity 104, 104', 104" is bigger than the outer diameter of shank 408. Additionally, threads 410 have a major diameter, which is the outer diameter of the peaks of the threads, that is bigger than the diameter of cavity 104, 104', 104" and prevents cylindrical guiding sleeve 100, 100', 100" from sliding onto threads 410.

Closeup illustrates how the major diameter keeps cylindrical guiding sleeve 100, 100', 100" on SEM bolt 400. The distance 404 from the surface of shank 408 to major diameter is larger than distance 402 from the surface of shank 408 to cylindrical guiding sleeve 100, 100', 100". For example, distance 404 may be greater than distance 402. Distance 402 should be less than a height of threads 410 but big enough to fit loosely around shank 408. For example, an M14 bolt having a major diameter of 14 mm and a minor diameter of 11.5 mm may include a cylindrical guiding sleeve 100, 100', 100" configured for an M14 bolt. This cylindrical guiding sleeve hollow interior 104, 104', 104" that is between 12.7 mm and 12.8 mm. This allows the cylindrical guiding sleeve to loosely fit around the shank of an M14 bolt without being able to slide past the threads of an M14 bolt. A person of skill in the art understands that cylindrical guiding sleeves configured for different sized bolts will have similarly proportional dimensions.

Alternatively, or in addition, an end of cylindrical guiding sleeve 100, 100' could be crimped to ensure that the end of cylindrical guiding sleeve 100, 100', 100" cannot fit over threads 410, thereby ensuring that cylindrical guiding sleeve 100, 100', 100" stays connected around bolt 400. Such connection features are especially useful during transport and storage of the bolt, ensuring that the cylindrical guiding sleeve 100, 100', 100" does not become disconnected to bolt 400.

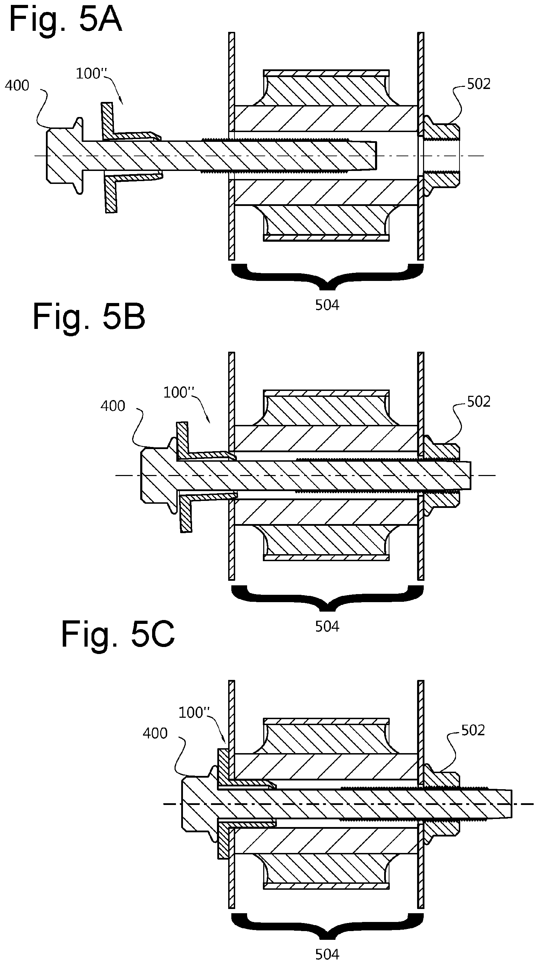

FIGS. 5A - 5C illustrate different points in time during an assembly of bolt 400 in combination with cylindrical guiding sleeve 100, 100', 100" into assembly 504. The bolt shaft may engage with nut 502 to assembly the receiving parts of assembly 504.

FIG. 5A illustrates a first point in time where cylindrical guiding sleeve 100, 100', 100" is on the bolt shaft of bolt 400. The tapered end 106, 106', 106" centers the cylindrical guiding sleeve 100, 100', 100" at the tapered end 106 around the bolt. As shown in FIG. 5A, the end of cylindrical guiding sleeve 100, 100', 100" closest to the bolt head may fall and not be aligned with the center of the bolt.

Bolt 400 is aligned with an opening of a receiving part of assembly 504 to assemble the part the receiving parts.

FIG. 5B illustrates a second point in time where cylindrical guiding sleeve 100, 100', 100" is on the bolt shaft of bolt 400. As the cylindrical guiding sleeve 100, 100', 100" approaches the opening of assembly 504, tapered end 106, 106', 106" ensures that the cylindrical guiding sleeve 100, 100', 100" is aligned with the opening of the assembly to insert into the cavity of assembly 504 without further manipulation. Here, tapered end 106, 106', 106" begins to guide cylindrical guiding sleeve 100, 100', 100" into assembly 504

FIG. 5C illustrates a third point in time where cylindrical guiding sleeve 100, 100', 100" is on the bolt shaft of bolt 400. As bolt 400 is inserted into assembly 504, cylindrical guiding sleeve 100, 100', 100" is inserted into the cavity of assembly 504 until the entire cylindrical guiding sleeve 100, 100', 100" is inserted and aligned with bolt 400 and the cavity of assembly 504.

The thickness of tapered end 106, 106', 106" may be determined so that it deforms upon assembly. For example, if opening 108, 108', 108" is configured to make 3 or more points of contact with bolt shaft 408, the thickness of tapered end 106, 106', 106" may be thin enough so that tightening bolt 400 deforms tapered end 106, 106', 106" such that at least one point of contact between tapered end 106, 106', 106" and bolt shaft 408 is removed.

Additionally, thickness of cylindrical guiding sleeve 100, 100', 100" may be determined based on tolerances of assembly 504. If assembly 504 has a small value for tolerances, for example, an opening that is slightly bigger than the bolt, than the thickness of cylindrical guiding sleeve 100, 100', 100" and tapered end 106, 106', 106" may set to be not be relatively thin such that the diameter of cylindrical guiding sleeve 100, 100', 100" is slightly bigger than the diameter of bolt 400. If assembly 504 has a large value for tolerances, for example, an opening that is considerably bigger than the bolt, than the thickness of cylindrical guiding sleeve 100, 100', 100" and tapered end 106, 106', 106" may set to be relatively thick such that the diameter of cylindrical guiding sleeve 100, 100', 100" is considerably bigger than the diameter of bolt 400. Tolerance values may be set determined by standardized tolerance values.

The thickness of cylindrical guiding sleeve 100, 100', 100" is such that at least part of the circumference of exterior surface 102, 102', 102" is in tightly in contact with the receiving part when inserted into an opening of the receiving part.

The mechanical lock created between cylindrical guiding sleeve 100, 100', 100" and a receiving part creates a bolted joint that is more resistant to shear forces. Cylindrical guiding sleeve 100, 100', 100" reduces the area that shear forces can act on a bolt, thus reducing the overall shear forces acting on the bolt. As a result, the bolted joint is less likely to slip as compared to a conventional bolted joint. For example, a bolted joint in a motor or engine may be subject to shear forces during operation. Over time, the shear forces may loosen the bolted joint. Incorporating a cylindrical guiding sleeve 100, 100', 100" into bolted joint reduces the shear area of the bolted joint such that less shear forces are acting on the bolt which minimizes or prevents slippage of the. This in turn may reduce overall maintenance needed on an assembly such as a motor or engine.

Because cylindrical guiding sleeve 100, 100', 100" reduces the amount of shear forces acting on a bolt as compared to using conventional bolts alone, bolt size may be reduced without affecting performance. For example, depending on the assembly environment, a conventional M14 bolt in an assembly may be reduced to an M12 bolt with cylindrical guiding sleeve 100, 100', 100" because the M12 bolt with cylindrical guiding sleeve 100, 100', 100" can tolerate equal or greater shear forces than a convention M14 bolt.

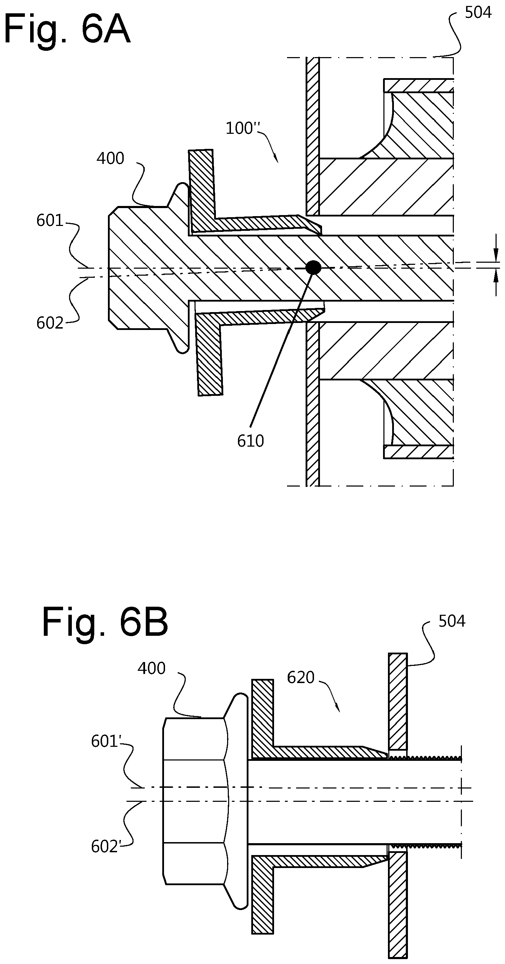

FIG. 6A is a cross sectional view of the cylindrical guiding sleeve connected to a bolt to join two receiving parts. FIG. 6A may represent a second point in time during assembly as described with respect to FIG 5B. FIG. 6A illustrates how cylindrical guiding sleeve 100, 100', 100" is centered around bolt 400 at tapered end 106, 106', 106". Center line 601 represents a center along the length of bolt 400. The end of cylindrical guiding sleeve 100, 100', 100" opposite of tapered end 106, 106', 106" is not aligned with the center of bolt 400 because gravity or other forces are acing upon cylindrical guiding sleeve 100, 100', 100". Center lines 601 and 602 intersect at point 610 which represents that both cylindrical guiding sleeve 100, 100', 100" and bolt 400 are aligned at point 610. Because cylindrical guiding sleeve 100, 100', 100" and bolt 400 are aligned at point 610 cylindrical guiding sleeve 100, 100', 100" is inserted into the opening of assembly 504 as bolt 400 is inserted into the opening of assembly 504 without the need of other actions.

FIG. 6B is a cross sectional view of cylindrical sleeve 620 connected to bolt 400 to join two receiving parts in assembly 504. Sleeve 620 of FIG. 6B does not include a tapered end as illustrated in the previous figures. Without the a tapered end, gravity or other forces act on cylindrical sleeve 620 and there is no intersection between bolt center line 601' and sleeve center line 602'. As shown in FIG. 6B, bolt center line 601' is parallel or nearly parallel to sleeve center line 602'. As a result, cylindrical sleeve 620 catches on assembly 504 and is unable to insert into the opening of assembly 504 when inserting bolt 400. Cylindrical sleeve 620 requires further interference to insert into assembly 504.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A cylindrical guiding sleeve comprising:
an exterior surface configured to engage with a receiving part when the cylindrical sleeve is inserted into the receiving part;
a hollow interior configured to receive a bolt shaft;
an opening at a tapered end, wherein the opening is smaller than the hollow interior and wherein a shape of the opening is configured to limit movement of the tapered end around the bolt shaft such that the tapered end is substantially centred around a centre of the bolt shaft.

2. The cylindrical guiding sleeve of claim 1, wherein the shape of the opening is configured to generate at least three points of contact with the bolt shaft.

3. The cylindrical guiding sleeve of any of the preceding claims, further includes an annular disc, wherein a central hole of the annular disc aligns with the hollow interior.

4. The cylindrical guiding sleeve of any of the preceding claims, wherein the exterior surface includes a texture.

5. The cylindrical guiding sleeve of claim 4, wherein the exterior surface is knurled.

6. The cylindrical guiding sleeve of claim 4, wherein the texture includes a serrations.

7. The cylindrical guiding sleeve of any of the preceding claims, wherein the annular disc extends wider than the cylindrical guiding sleeve to form a shoulder around the cylindrical stem.

8. The cylindrical guiding sleeve of claim 6, wherein a second side of the annular disc is configured to connect to a head of a bolt.

9. The cylindrical guiding sleeve of any of the preceding claims, wherein the cylindrical guiding sleeve is formed of a ferrous material.

10. The cylindrical guiding sleeve of any of the preceding claims, wherein the thickness of the tapered end is based on a tolerance of an assembly.

11. The cylindrical guiding sleeve of any of the preceding claims, wherein the shape of the opening at the tapered is based on a tolerance of an assembly.

12. The cylindrical guiding sleeve of any of the preceding claims, wherein the exterior surface is configured to generate a mechanical lock between the cylindrical guiding sleeve and the receiving part.

13. The cylindrical guiding sleeve of any of the preceding claims, wherein the shape of the opening is substantially triangular.

14. The cylindrical guiding sleeve of any of the preceding claims, wherein the tapered end of the cylindrical guiding sleeve has a thickness configured to deform the tapered end upon assembly.

15. A bolt comprising the cylindrical guiding sleeve of any of claims 1-14.
